# EUROPEAN PATENT APPLICATION

(11) **EP 3 376 475 A1**
(43) Date of publication of application: **19.09.2018**
(21) Application number: 17161163.5
(22) Date of filing: 15.03.2017
(51) Int. Cl.: G07C 9/00

(54) **SECURITY APPARATUS**

(71) Applicant: NXP B.V., 5656 AG Eindhoven (NL)
(72) Inventor: Nowottnick, Juergen, 5656 AG Eindhoven (NL); Graeber, Frank, 5656 AG Eindhoven (NL)
(74) Representative: Hardingham, Christopher Mark

(57) **Abstract**

A security-apparatus, comprising: a security-location-terminal, configured to receive security-location-information representative of a location of a key-module; and a lock-location-terminal, configured to receive lock-location-information representative of a location of a lock-module, a processor, configured to compare the security-location-information with the lock-location-information, and determine a security-condition-signal based on whether the location of the key-module is inside or outside of a predetermined-proximity of the location of the lock-module; and an output-terminal, configured to provide the security-condition-signal. The security-apparatus is configured to receive at least one of the security-location-information and the lock-location-information via a mobile telecommunications network.

## Description

The present disclosure relates to a security apparatus, and in particular, although not necessarily, a security apparatus configured to provide secure access to functional features of an automotive vehicle.

According to a first aspect of the present disclosure there is provided a security-apparatus, comprising:
a security-location-terminal, configured to receive security-location-information representative of a location of a key-module; and
a lock-location-terminal, configured to receive lock-location-information representative of a location of a lock-module,
a processor, configured to compare the security-location-information with the lock-location-information, and determine a security-condition-signal based on whether the location of the key-module is inside or outside of a predetermined-proximity of the location of the lock-module; and
an output-terminal, configured to provide the security-condition-signal,
wherein, the security-apparatus is configured to receive at least one of the security-location-information and the lock-location-information via a mobile telecommunications network.

In one or more embodiments, the lock-module may be provided in a vehicle and the security-condition-signal may be configured to enable a user to access the vehicle.

In one or more embodiments, the security-location-data may further comprise a user-identification-string representative of a particular user.

In one or more embodiments, if the location of the key-module is outside of the predetermined-proximity of the location of the lock-module, then the processor may be configured to set the security-condition-signal to comprise an outside-value

In one or more embodiments, if the location of the key-module is inside of the predetermined-proximity of the location of the lock-module, then the processor may be configured to set the security-condition-signal to comprise an inside-value.

In one or more embodiments, the outside-value may be configured to set an outside-mode of operation comprising one or more of:
enabling: a locking mode of operation / a window-closure mode of operation / an engine immobilizer mode of operation / a door-closure mode of operation;
disabling: a PKE mode of operation / a RKE mode of operation / a PKG mode of operation / a self-parking mode of operation / an air-conditioning mode of operation / a lighting mode of operation.

In one or more embodiments, the inside-value may be configured to set an inside-mode of operation comprising one or more of:
enabling: a PKE mode of operation / a RKE mode of operation / a PKG mode of operation / a self-parking mode of operation / an air-conditioning mode of operation / a lighting mode of operation
disabling: a locking mode of operation / an engine immobilizer mode of operation.

In one or more embodiments, the processor may be further configured to compare the security-location-information with the lock-location-information, and determine the security-condition-signal based on whether the location of the key-module is inside or outside of a second-predetermined-proximity of the location of the lock-module.

In one or more embodiments, if the location of the key-module is outside of the second-predetermined-proximity of the location of the lock-module, then the processor may be configured to set the security-condition-signal to comprise a second-outside-value.

In one or more embodiments, if the location of the key-module is inside of the second-predetermined-proximity of the location of the lock-module, then the processor may be configured to set the security-condition-signal to comprise a second-inside-value.

In one or more embodiments, the second-outside-value may be configured to set an outside-mode of operation comprising one or more of enabling a second-outside-mode of operation and disabling a third-outside-mode of operation.

In one or more embodiments, the second-inside-value may be configured to set an inside-mode of operation comprising one or more of enabling a second-inside-mode of operation and disabling a third-inside-mode of operation.

In one or more embodiments, the security-condition-signal may be provided to an authorization-module configured to provide an authorization-signal based on the security-condition-signal and one or more of:
a user-actuation-signal representative of a user input; and
a matching-signal based on matching the security-condition-signal with predetermined-identity-data stored in a memory-module.

In one or more embodiments, one or more of the security-location-information and the lock-location-information may be provided by the mobile telecommunications network.

In one or more embodiments, the security-apparatus may be further configured to:
determine a distance between the lock-module and the key-module by comparing the security-location-information with the lock-location-information; and
set the security-condition-signal to comprise:
   an inside-value, if the distance is less than a predetermined threshold; or
   an outside-value, if the distance is greater than the predetermined threshold.

In one or more embodiments, the security-apparatus may be configured to receive at least one of the security-location-information and the lock-location-information in an encrypted form and to perform decryption.

In one or more embodiments, the security-apparatus may be further configured to:
store a previous-locking-location based on a location of one or more of the key-module and the lock-module at a time of a previous locking-operation;
compare the previous-locking-location with the security-location-information; and
if the key-module is within a predetermined proximity of the previous-locking-location then provide an access-authorisation signal to the lock-module via the mobile telecommunications network.

In one or more embodiments, the security-location-data may further comprise a user-identification-string representative of a particular user, the security-apparatus may further comprise a memory module configured to store a plurality of user-identification-data-strings, and wherein the security-apparatus may be further configured to determine the security-condition-signal based on matching the security-location-information with at least one of the plurality of user-identification-data-strings.

In one or more embodiments, the security-apparatus may be configured to perform the following steps in the following order:
i) match the security-location-information with a least one of the plurality of user-identification-data-strings
ii) determine the security-condition-signal based on whether the location of the key-module is inside or outside of a predetermined-proximity of the location of the lock-module
iii) perform an authentication step by communication with one or more of the key-module and the lock-module via the mobile telecommunications network;
iv) provide an access-signal to an access-terminal, to enable a user to access a vehicle, based on the security-condition-signal and/or the authentication step.

In one or more embodiments, a system comprising the security apparatus of the present disclosure. The system may be any one of: an integrated circuit; a mobile electronic device comprising the key-module; a vehicle comprising the lock-module; and a network-module coupled to the mobile telecommunications network.

While the disclosure is amenable to various modifications and alternative forms, specifics thereof have been shown by way of example in the drawings and will be described in detail. It should be understood, however, that other embodiments, beyond the particular embodiments described, are possible as well. All modifications, equivalents, and alternative embodiments falling within the spirit and scope of the appended claims are covered as well.

The above discussion is not intended to represent every example embodiment or every implementation within the scope of the current or future Claim sets. The figures and Detailed Description that follow also exemplify various example embodiments. Various example embodiments may be more completely understood in consideration of the following Detailed Description in connection with the accompanying Drawings.

One or more embodiments will now be described by way of example only with reference to the accompanying drawings in which:
Figure 1 shows an example of a Passive Keyless Entry system for a vehicle;
Figure 2 shows an example of a schematic diagram depicting information flows during a Relay Station Attack against a Passive Keyless Entry system;
Figure 3 shows an example embodiment of a security apparatus that may prevent a Relay Station Attack from succeeding, or provide other functionality based on matching positions of a key-module and a lock-module;
Figure 4 shows an example embodiment of an authorisation module that may form a part of a security apparatus similar to that of Figure 3;
Figure 5 shows an example embodiment of a security apparatus, similar to that of Figure 3, in operation, exchanging data with a mobile telecommunications network;
Figure 6 shows an example embodiment of a security apparatus, similar to that of Figure 3, further comprising a memory-module;
Figure 7 shows an example embodiment of a method of operating a security apparatus, such as that of Figure 6; and
Figure 8 shows an example embodiment of a four pass authentication system that may be used to secure communications between a security apparatus, such as that of Figure 3, and other components connected to the security apparatus via a mobile telecommunications network.

Remote Keyless Entry (RKE), Passive Keyless Entry (PKE) and Passive Keyless Go (PKG) are features of some vehicles, such as cars and trucks. The idea of PKE is that the user does not have to use either (i) a mechanical key or (ii) operate any buttons on a key fob or a remote control, in order to open the doors. Similarly, a user will not need to manually operate a key to start the engine of a vehicle with PKG functionality, once the user is inside the vehicle. The presence of the vehicle key in the immediate vicinity of the vehicle, optionally in combination with the user touching the door handle or operating an engine start button inside the vehicle, may be sufficient for the vehicle to execute the desired action.

PKE/PKG solutions can employ a system of two independent communications subsystems.

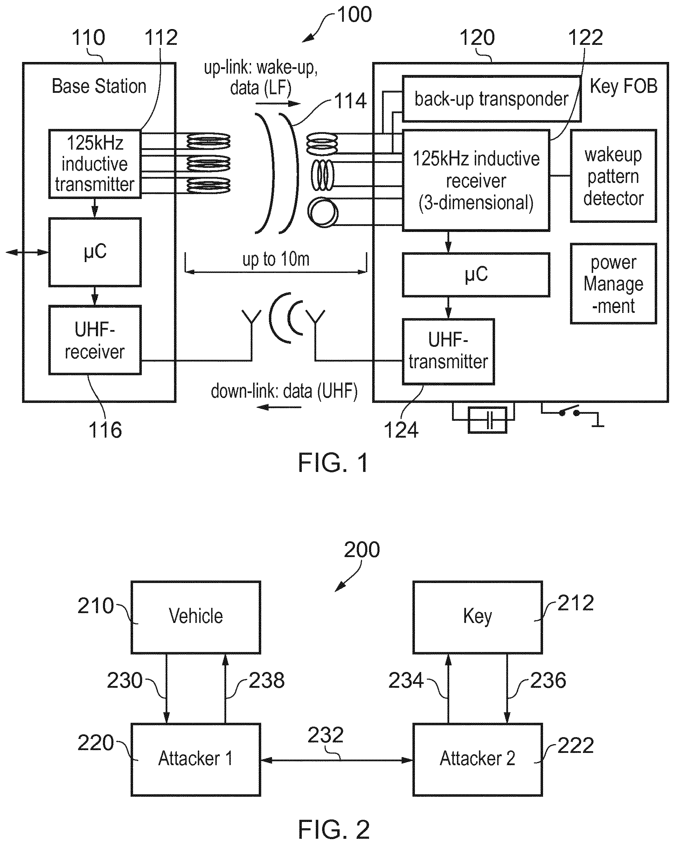

Figure 1 shows a PKE system 100 comprising a low frequency (LF) sub-system 112, which is fitted to a vehicle 110, and provides a 125 kHz magnetic induction field 114 in the vicinity of the vehicle 110. This LF signalling is an example of vehicle proximity signalling. The LF signalling may be detected by a LF sub-system 122 provided as part of a key fob 120. If the LF signalling is detected by the key fob 120, it may indicate that the vehicle 110 is nearby, given the short range of the signalling. Other systems with a 22 kHz operating frequency may also be employed. The 125 kHz LF system technology may also serve as a fall-back solution for situations when a battery in a key fob is empty or discharged.

An Ultra High Frequency (UHF) wireless communications sub-system 124 is provided in the key fob 120. A Very High Frequency (VHF) sub-system may be used as an alternative to the UHF sub-system 124. The UHF sub-system 124 is used to verify that a registered key fob 120 is communicating with a vehicle UHF sub-system 116 in the vehicle 110 and to provide wireless remote control commands to the vehicle 110 from the key fob 120. In some examples, the UHF communication may be bi-directional between the key fob 120 and the vehicle 110.

A typical range of the LF magnetic induction field outside the vehicle 110 is about 5 metres. The magnetic induction field decays quickly beyond this range and effectively makes it impossible for the vehicle key fob 120 to detect the LF signal beyond this range. If the vehicle key fob 120 is located within a predetermined proximity of the vehicle 110, it can detect the magnetic induction field and will activate the UHF communications sub-system. Then the vehicle key fob 120 may exchange messages with the vehicle 110 in order to authenticate itself as a registered, valid, vehicle key fob 120. The vehicle 110 in return will accept commands from this vehicle key fob 120 and/or take appropriate actions in case the user touches one of the door handles or presses the "engine start" button inside the vehicle 110, for example.

An RKE system may include a UHF communication system, similar to that of a PKE system, but does not include an LF communication system. The UHF communication system is typically activated by a user of an RKE system pressing a button on a key fob to activate the required functionality.

Generally, PKE systems are vulnerable to so-called relay attacks (which will be described further below). One or more examples described in the present disclosure propose countermeasures that aim at preventing unauthorized access to vehicles by way of relay attacks or other techniques.

Figure 2 shows a schematic diagram 200 of the information flows involved in a successful relay attack against a keyless entry system. Generally, a relay attack is a type of hacking technique in which communication between a vehicle's immobilizer and the vehicle's key is initiated by the attacker, who then merely relays messages between the two components, without manipulating the messages or even necessarily reading them.

A vehicle 210 is situated in a first location. A key 212 for the vehicle is situated at a second location that is remote from the vehicle's location. The distance between the key 212 and the vehicle 210 is such that they cannot communicate directly with each other using either a low frequency, or very high frequency, sub-system, such as the ones described above.

A first attacker 220 is located proximal to the vehicle 210. A second attacker 222 is located proximal to the key 212. The first attacker 220 is close enough to the vehicle 210 to receive the short range LF signal 230 from the vehicle 210. The first attacker 220 wirelessly relays the short range LF signal, by a suitable two-way wireless link 232, to the second attacker 222. The second attacker 222 then transmits 234 the short range LF signal to the key 212. This transmission 234 replicates what the key 212 would receive if located sufficiently close to the vehicle 210. Therefore, the key 212 responds by transmitting the wireless remote control commands 236, such as the VHF or UHF signals discussed above, to enable access to the vehicle 210. The second attacker 222 receives and then relays the wireless remote control commands 236 across the two-way wireless link 232 to the first attacker 220. The first attacker 220 then provides a transmission 238 that replicates the wireless remote control commands 236 transmitted by the key 212. When the vehicle 210 receives the transmission 238 it allows access to the vehicle 210, on the basis that the key 212 appears to be present, even though the key 212 may be located hundreds or even thousands of metres away from the vehicle 210.

In this way, a thief may steal the vehicle 210, or any contents of the vehicle 210, even though the key 212 is in the rightful owner's possession, but is also within RF range of the second attacker 222.

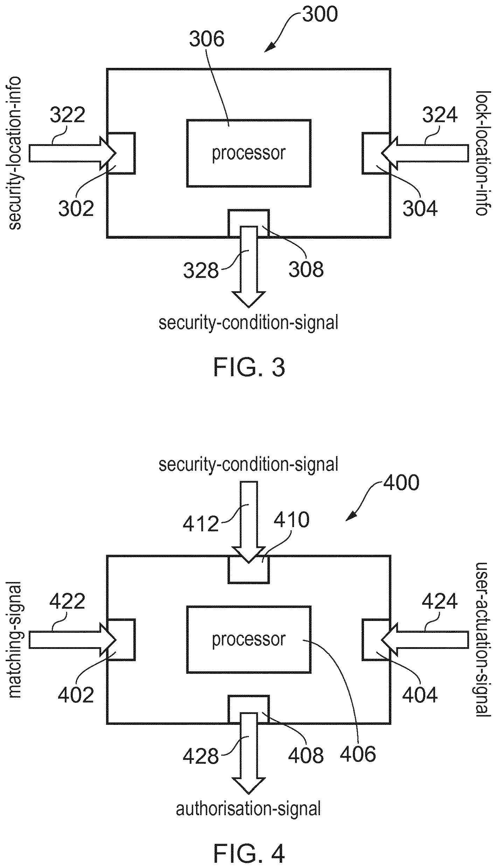

Figure 3 shows an example embodiment of a security apparatus 300. The security apparatus 300 may be provided as an integrated circuit or other electronic circuit, which may be built into a vehicle, or a vehicle key, or may be provided as part of a mobile phone network infrastructure that is remote from both the vehicle and the vehicle key. Other equivalent embodiments may be provided as software. It will be appreciated that the vehicle key may be any apparatus, such as a smartphone, that is configured to provide authorised access to a vehicle. Such an apparatus may include dedicated circuitry to implement embodiments of the present disclosure, or may implement them using other circuitry and appropriately configured software.

In this disclosure, references to access to a vehicle means access to any functionality of the vehicle. Examples of access include physical access to the interior of the vehicle, such as may be provided by unlocking and/or opening a door. Other examples of access include starting a vehicle engine or engaging a remote parking functionality, for example.

Where the security apparatus 300 is built into a vehicle it may be mechanically coupled to the vehicle in order to prevent it from being removed to circumvent the associated security functionality.

Alternatively, the security apparatus 300 may be built into a mobile device, such as a smartphone or a smart key fob, such that the mobile device may provide the functionality of a vehicle key. In such cases, the security apparatus 300 may be movable relative to a vehicle such that a user may keep the security apparatus 300 on their person in order to use it to unlock/access the vehicle when they are close enough to the vehicle to wish to do so.

In another alternative, the security apparatus 300 may be built into a mobile telecommunications network and may perform its functions by communicating with a vehicle and an associated vehicle key device via the mobile telecommunications network.

The security-apparatus 300 has a security-location-terminal 302, configured to receive security-location-information 322 representative of a location of a key-module (not shown). The key-module may be remote from the security-apparatus 300, but may be carried on a user's person to enable the user to access the vehicle. For example, the key-module may be provided in the form of circuitry, or software, included in a user's smartphone.

The security-apparatus 300 also has a lock-location-terminal 304, configured to receive lock-location-information 324 representative of a location of a lock-module (not shown). The lock-module may be remote from the security-apparatus 300. The lock-module may, for example, be provided by circuitry or software included in a vehicle.

The security-apparatus 300 is configured to receive at least one of the security-location-information 322 and the lock-location-information 324 via a mobile telecommunications network (not shown). In examples where the security-apparatus 300 is provided in part of the mobile telecommunications network, such as on a server at a remote location, the security-apparatus 300 can receive both the security-location-information 322 and the lock-location-information 324 via the mobile telecommunications network.

If the security-apparatus is built into a user's vehicle key device, then the security-location-information 322 may be provided directly to the security-apparatus 300, without using the mobile telecommunications network. Whereas, the lock-location-information 324 can be provided via the mobile telecommunications network.

Conversely, if the security-apparatus 300 is built into a vehicle, then the lock-location-information 324 may be provided directly to the security-apparatus 300 by a communications network inside the vehicle, without using a mobile telecommunications network. In addition, the security-location-information 322 can be provided to the security-apparatus 300 via the mobile telecommunications network.

The security-apparatus 300 also has a processor 306, configured to compare the security-location-information 322 with the lock-location-information 324. This comparison may simply involve comparing the location of the key-module against the location of the lock-module. The processor 306 then determines a security-condition-signal 328 based on whether the location of the key-module is inside or outside of a predetermined-proximity of the location of the lock-module. The location of the key-module may be inside of the predetermined-proximity if the location of the key-module is less than a predetermined threshold distance from the location of the lock-module; if the location of the key-module is greater than the predetermined threshold distance from the location of the lock-module then the key-module may be outside of the predetermined-proximity. Other options for determining whether the key-module is inside or outside of the predetermined-proximity are possible. For example, the key-module may be inside of the predetermined-proximity if the key-module is inside a predetermined area, such as a car park, irrespective of the location of the vehicle inside of the predetermined area. The predetermined-proximity may also be referred to as a first-predetermined-proximity.

The security apparatus 300 also has an output-terminal 308, configured to provide the security-condition-signal 328, such as to components of a vehicle security system, either directly, such as via a vehicle communication network, or indirectly, such as via a mobile telecommunications network. The output-terminal 308 is an example of a security-condition-output-terminal.

In some examples, the lock-module may be provided in a vehicle and the security-condition-signal 328 may be configured to enable a user to access the vehicle. For example, in a RKE mode of operation, a user may activate a mobile device by pushing a button, or activating a sensor, and the mobile device may provide the security-location-information 322 to the security apparatus 300. The security apparatus 300 may also receive the lock-location-information 324, and if the key-module is sufficiently close to the lock-module, the security apparatus 300 may provide the security-condition-signal 328 to the vehicle security system, such that the vehicle security system unlocks the vehicle.

Various options exist for determining the location of the lock-module, to provide the lock-location-signal 324. Similarly, various options exist for determining the location of the key-module, to provide the security-location-information 322. For example, if the lock-module is provided in a vehicle, then the lock-location-signal 324 may be provided based on location-data determined by a built-in vehicle navigation system, such as a satellite positioning system, for example a Global Positioning System (GPS) device. Similarly, if the key-module is provided in a user's mobile device, such as a smartphone, then security-location-information 322 may be provided based on location data determined by a navigation system built into the mobile device.

In some examples, one or more of the security-location-information and the lock-location-information may be provided by the mobile telecommunications network. For example, the localization accuracy of 5G mobile telecommunications networks is expected to be in the order of one-meter accuracy or even below. The positioning algorithms and network data processing may be carried out at the network side, such as on a server that is remote from both the vehicle and the mobile device, thus providing a highly energy-efficient approach from the mobile device's perspective. That is, the computationally and therefore energy intensive processing required to analyse network data to provide precise localisation need not be performed on the mobile device, thereby avoiding the consumption of power by the mobile device. The precise localisation analysis may provide precise absolute locations for both the vehicle (and hence a lock-module inside the vehicle), and the mobile device (and hence a key-module inside the mobile device).

Where the communication links between the security apparatus and the key-module and/or lock-module are based on a mobile telecommunications network, RKE, PKE, and PKG systems may be implemented without using any local access system that communicates directly, and locally, between the key-module and the lock-module. Therefore, an additional intervening network may not be required. Advantageously therefore, no additional hardware may be required. Only the existing mobile telecommunications nodes, that may already be provided in vehicles and mobile devices can be used, which advantageously makes a double use of those nodes. Thereby, components such as LF/UHF/GHz antennas, base stations, transponders and cables may not be required to implement functionality that otherwise would depend on such components.

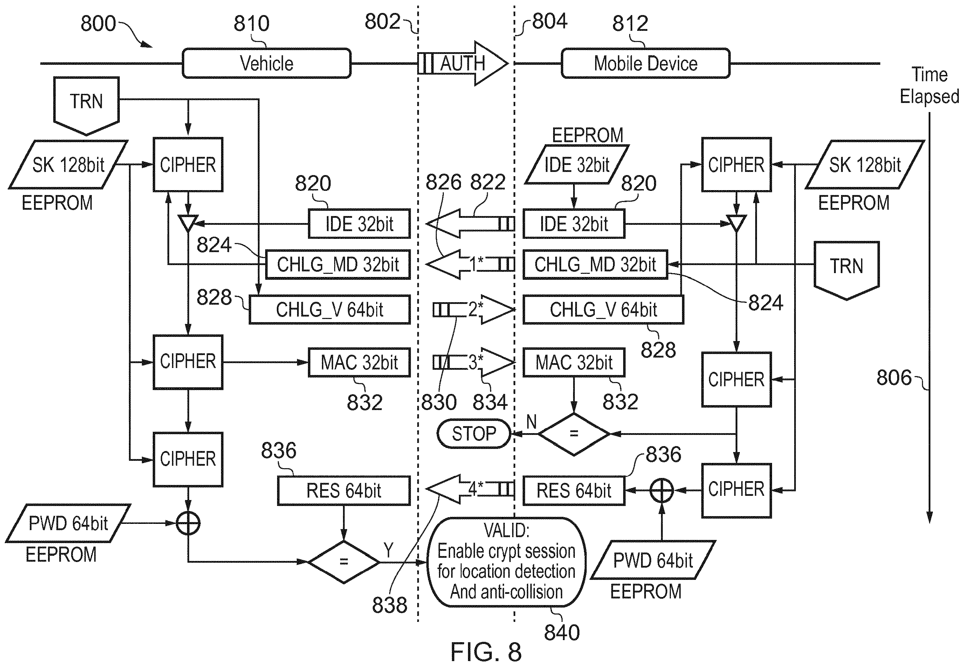

The mobile telecommunications network may advantageously have certain features and attributes, such as one or more of:
- Fast latency times (such as less than 1 millisecond);
- High data rates;
- Precise location detection of mobile nodes (such as less than one metre accuracy), which may be provided for mobile devices and vehicles;
- Mobile nodes may comprise a secured element or similar, in order to realize end to end encryption, such as by an Advanced Encryption Standard (AES) 128 bit cypher;
- Mobile nodes may comprise true random number generators (to generate the challenges at both sides,) as described in greater detail below in relation to Figure 8;
- Mobile nodes may comprise secured secret key storage in EEPROM (to store a shared secret, passwords and identifiers);
- Optionally, asymmetric cryptographic engines may be used to handle the secret key transfer from the vehicle to the mobile device, such as by elliptic curve cryptography (ECC).

In some examples, the security-apparatus 300 may be configured to set the security-condition-signal 328 to have one of two different values. If the location of the key-module is outside of the predetermined-proximity of the location of the lock-module, then the processor 306 may be configured to set the security-condition-signal 328 to have an outside-value. If the location of the key-module is inside of the predetermined-proximity of the location of the lock-module, then the processor 306 may be configured to set the security-condition-signal 328 to have an inside-value. Generally, the security-condition-signal 328 may contain other data in addition to the inside-value or the outside-value.

When the security-condition-signal 328 is set to have the outside-value, the security apparatus 300 may be configured to set an outside-mode of operation. For example, the security-condition-signal 328 with the outside-value may be provided to a vehicle security system that is configured to respond to the outside-value by either enabling or disabling a particular mode of operation of the vehicle.

For example, the outside-value may enable any one or more of: a locking mode of operation; a window-closure mode of operation; an engine immobilizer mode of operation; and a door-closure mode of operation. In this way, when the security apparatus determines that the key-module is sufficiently far away from the lock-module to be outside of the predetermined proximity, the security apparatus may send an instruction to the vehicle to lock the doors, close any windows that are open, engage an engine immobilizer to immobilize the engine, or close any doors that are open, before locking them. A user may thereby advantageously secure their vehicle by simply walking away from it, even if the doors and windows are initially open.

In a further example, the outside-value may disable any one or more of: a RKE mode of operation; a PKE mode of operation; a PKG mode of operation; a self-parking mode of operation; an air-conditioning mode of operation; and a lighting mode of operation.

When the security-condition-signal 328 is set to have the inside-value, the security apparatus 300 may be configured to set an inside-mode of operation. For example, the security-condition-signal 328 may be provided to a vehicle security system that is configured to respond to the security-condition-signal 328 by either enabling or disabling a particular mode of operation of the vehicle.

For example, the security-condition-signal 328 with an inside-value may enable any one or more of: a PKE mode of operation, a RKE mode of operation, a PKG mode of operation, a self-parking mode of operation, an air-conditioning mode of operation, a lighting mode of operation.

In further examples, the security-condition-signal 328 with an inside-value may disable any one or more of: a locking mode of operation or an engine immobilizer mode of operation.

In some examples, one or more of the security-location-information 322 and the lock-location-information 324 may be provided to the security-apparatus 300 in an encrypted form. The security-apparatus 300 may therefore be configured to perform decryption of the received encrypted signal, such that the data contained in the encrypted signal can be used by the security-apparatus 300 to determine the security-condition-signal 328. The use of encryption may improve the security of the systems described herein.

In some examples, the processor 306 may be further configured to compare the security-location-information 322 with the lock-location-information 324, and determine the security-condition-signal 328 based on whether the location of the key-module is inside or outside of a second-predetermined-proximity of the location of the lock-module. The second-predetermined-proximity may be different than the predetermined-proximity described above. For example, the second-predetermined-proximity may be entirely contained within the predetermined-proximity, or alternatively, the second-predetermined-proximity may entirely contain the predetermined-proximity.

If the location of the key-module is outside of the second-predetermined-proximity of the location of the lock-module, then the processor 306 may set the security-condition-signal 328 to have a second-outside-value. If the location of the key-module is inside of the second-predetermined-proximity of the location of the lock-module, then the processor 306 may set the security-condition-signal 328 to comprise a second-inside-value. In this way, the security-condition-signal 328 may have both an inside-value and either a second-inside-value or a second-outside-value at the same time. Alternatively, the security-condition-signal 328 may have both an outside-value and either a second-inside-value or a second-outside-value at the same time. In other examples, the security-condition-signal 328 may have a plurality of different inside-values or outside-values defined by the location of the key-module relative to a plurality of different predetermined proximities with respect to the lock-module.

In this way, different functionalities may be enabled or disabled depending on how far away from the vehicle the key-module is positioned. When the security-condition-signal has the second-outside-value, the security-condition-signal may set an outside-mode of operation comprising one or more of enabling a second-outside-mode of operation, such as a locking mode of operation, and disabling a third-outside-mode of operation, such as a PKG mode of operation. Thus, the PKG mode of operation may be enabled when the user is inside of their vehicle but disabled when the user is outside of their vehicle. Similarly, the locking mode of operation may be enabled when the user is outside of their vehicle, but disabled when they are inside of their vehicle.

Similarly, the second-inside-value may be used to set an inside-mode of operation consisting of one or more of enabling a second-inside-mode of operation and disabling a third-inside-mode of operation. For example, as the user approaches their vehicle from a distance, a second-inside-mode of operation, such as an air-conditioning or heating mode of operation, may be engaged. However, at the same distance, a remote-parking mode of operation may be disabled, if the user is not sufficiently close to the vehicle in order to supervise the remote parking operation.

Generally, a cascade of different modes of operation may be successively enabled or disabled based on the user's location relative to their vehicle. Enabling a heating mode of operation when a user enters a first-predetermined proximity may provide sufficient time for the heating mode to heat the vehicle. Only when the user approaches the vehicle more closely may the PKE mode of operation be activated to unlock the vehicle, and only when the user is inside of the vehicle may the PKG mode be activated.

In some examples, the security-location-information 322 may also include a user-identification-string representative of a particular user. The user-identification-string may take any convenient form, such as a number that is sufficiently long that it can be specific to a particular user. Here, a particular user includes one or more mobile devices that may be associated with a particular person. For example, a smartphone may include a key-module and any additional circuitry and/or software required to determine the location information included in the security-location-information 322. In addition, the smartphone may include a serial number unique to that device, which thereby identifies that device, and hence identifies a person associated with that particular smartphone.

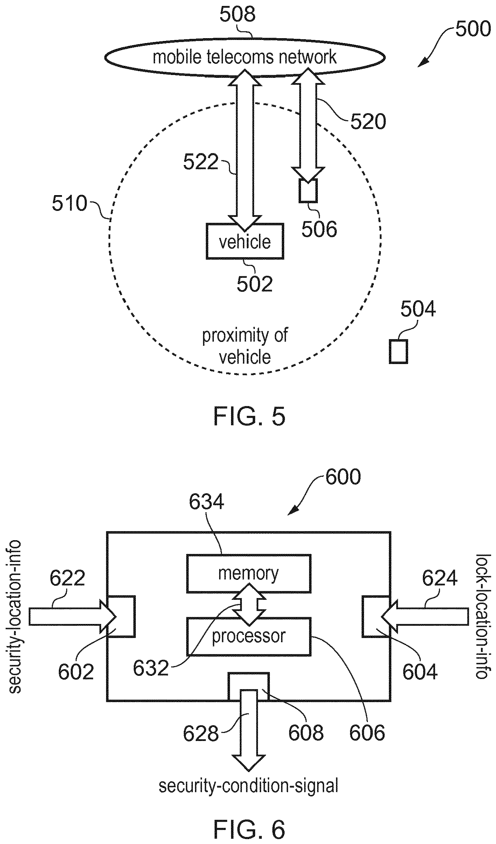

It will be appreciated that the security apparatus 300 may be used to enable access to a broad range of different functionalities. In the following, some specific examples are provided.
- Remote Keyless Entry (RKE):
   ∘ The user presses a button on the mobile phone.
   ∘ An app at the mobile phone sets up a fast and secured bidirectional communication link between the mobile phone node and the vehicle node using, for example, a 5G mobile communications network.
   ∘ The app transmits the location of the mobile phone to the vehicle node in an encrypted session.
   ∘ If the distance between the mobile access device and the vehicle is below a certain threshold and the authentication is successful, then the door of the vehicle is unlocked.
- Passive Keyless Entry (PKE):
   ∘ The user activates the communication sequence by a button press or a sensor activation at the door handle of the vehicle.
   ∘ An app in the car sets up a fast and secured bidirectional communication link between the mobile phone nodes (e.g. node 1 and 2) and the vehicle node using, for example, a 5G mobile network.
   ∘ The app at the mobile phones transmits the location of the mobile phone to the vehicle node in an encrypted session which may result in location detection that the mobile device is close to the vehicle but outside the vehicle.
   ∘ If the distance between one or more mobile access device and the vehicle is below a certain threshold 1 and above a certain threshold 2 and the authentication is successful, then the door of the vehicle is unlocked.
- Passive Keyless Go (PKG):
   ∘ The user activates the communication sequence by a button press or a sensor activation at the START/STOP button of the vehicle.
   ∘ An app in the car sets up a fast and secured bidirectional communication link between the mobile phone nodes (e.g. node 1 and 2) and the vehicle node, for example, using a 5G mobile network.
   ∘ The app at the mobile phone transmits the location of the mobile phone to the vehicle node in an encrypted session, which may result in a location detection that the mobile device is inside the vehicle.
   ∘ If the distance between one or more mobile access devices and the vehicle is below a certain threshold, and is therefore inside the vehicle, then authentication is successful and the engine of the vehicle is started.
- Self Driving Vehicle:
   ∘ The app transmits continuously the location of the mobile phone to the vehicle node in an encrypted session while vehicle is self-driving into a parking slot.
   ∘ If the distance between the mobile access device and the vehicle is above a certain threshold the vehicle stops self-driving, as the user is too far away to supervise the process.
- System wake up from power saving mode (for example, Welcome light)
   ∘ The mobile device executes a system background task to set up and maintain continuously a fast and secured bidirectional communication link between the mobile phone node and the vehicle node using 5G mobile standard.
   ∘ The mobile device transmits continuously the location of the mobile phone to the vehicle node in an encrypted session, while the vehicle is in a rest state.
   ∘ When mobile phone enters or leaves a certain predetermined proximity around the vehicle the system may launch the app on the mobile phone, or the vehicle may turn on the lights or automatically lock the doors.
   o To save power consumption and minimize data traffic, alternatively the mobile phone may store the last location of the vehicle (car is in parking status, not moving) to measure the distance against this reference location and launch the system when the mobile phone enters or leave a certain space around the vehicle, as described further below in relation to Figure 5.
- Granting access to the vehicle from a remote place, to allow a user to get into the car.
   ∘ The user who wants to get into the car activates the communication sequence by a button press or a sensor activation at the door handle of the vehicle or by starting an app of his mobile phone.
   ∘ The system uses a 5G mobile network to determine the positions of the user and the vehicle.
   ∘ If the distance between the user's mobile device and the vehicle is below a certain threshold and the authentication is successful, the remote car owner can permit entrance to the car and the door of the vehicle is unlocked, as described in further detail below in relation to Figure 4.

Figure 4 shows an authorisation module 400 that can optionally be included in a security apparatus, or be coupled to a security-apparatus, such as the security-apparatus described above in relation to Figure 3.

The authorisation module 400 has: (i) a matching-terminal 402 configured to receive a matching-signal 422; (ii) a user-actuation-terminal 404 configured to receive a user-actuation-signal 424; (iii) an input-terminal 410 configured to receive a security-condition-signal 412, such as may be provided by the security apparatus of Figure 3; and (iv) an authorisation-terminal 408 configured to provide an authorisation-signal 428. The input-terminal 410 is an example of a security-condition-input-terminal.

The matching-signal 422 can be provided, in response to the security-condition-signal 412, by a matching-module (not shown) which may be provided at a remote location, such as in a server connected to the mobile telecommunications network. When the security-condition-signal 412 includes a user-identification-string, the matching module may compare the user-identification-string against predetermined-identity-data, stored in a memory-module, to determine if the user is authorised to access the lock-module. The security-condition-signal 412 may also include information representative of the lock-module such that the matching module may attempt to match the user-identification-string against a pre-recorded list of users who are authorised to access the particular lock-module.

The user-actuation-signal 424 may be provided in response to the security-condition-signal 412 by a user-actuation-module (not shown). The user-actuation-module may be part of an authorised-user's mobile device. When the security-condition-signal 412 is received at the user-actuation-module, the mobile device may provide an alert signal to the authorised-user, and may also provide the identity of the user associated with the user-identification-string and/or the lock-module. In this way, the authorised-user may decide whether to allow the user to access the lock-module, or not, and then provide a user-actuation-signal 424, if they choose to allow the access, by pressing a button, or actuating a sensor, built into their mobile device.

The authorisation-module 400 also has a processor 406, which in some example may be the processor described above in relation to Figure 3, while in other examples the processor 406 may be a different module. The processor 406 is configured to receive the security-condition-signal 412 and one or both of the matching-signal 422 and the user-authorisation-signal 424. The processor 406 can then provide the authorisation-signal 428 if the matching-signal 422 and/or the user-actuation-signal 424 indicates that access should be granted. The authorisation-signal 428 may then be provided, for example, to a vehicle security system which may enable certain vehicle functionality, such as unlocking a door or enabling a PKG mode of operation, in response to the authorisation-signal 428.

Figure 5 shows a system 500, including a security apparatus similar to that disclosed in relation to Figure 3, where the system is in active operation. The system 500 includes a vehicle 502, a first-mobile-device 504, a second-mobile-device 506, and a mobile telecommunications network 508. In some examples, the second-mobile-device 506 may be the first-mobile-device 504 at a different time. The first-mobile-device 504 and the second-mobile-device 506 both contain a key-module. A security apparatus (not shown) may be located in any of: (i) the vehicle 502; (ii) the mobile telecommunications network 508; or (iii) the first-mobile-device 504 and the second-mobile-device 506.

The proximity 510 of the vehicle 502, which is an example of a predetermined-proximity, is encircled by a dotted line. In this example, the security apparatus is configured to store a previous-locking-location based on a location of one or more of the key-module and the lock-module at a time of a previous locking-operation, such as when a user used their mobile device to lock the vehicle 502. The security apparatus then compares the previous-locking-location with the security-location-information. The comparison may be performed on a regular basis, such as periodically. If the security apparatus determines, based on comparing the previous-locking-location with the security-location-information that the key-module is outside of the proximity 510 of the vehicle 502, then the security apparatus may take no further action. (This would be the case if the key-module is within the first-mobile-device 504, as it is shown in Figure 5.) However, if the security apparatus determines that the key-module is within the proximity 510 of the vehicle 502, then the security apparatus may initiate a communications link 520 between the second-mobile-device 506 and the vehicle 502 via the mobile telecommunications network 508. (This would be the case if the key-module is within the second-mobile-device 506, as it is shown in Figure 5.) The security apparatus may thereby provide an access-authorisation signal 522 to the vehicle 502 to enable access to certain vehicle functionality.

If the security apparatus is provided in the second-mobile-device 506 then the security apparatus may monitor the location of the second-mobile-device 506 (and hence of the key-module) relative to the predetermined proximity 510, without necessarily using the mobile telecommunications network 508. The mobile telecommunications network 508 may thereby only be used when the second-mobile-device 506 is close enough to the vehicle 502 to justify gaining access to the vehicle 502. In this way, usage of the bandwidth of the mobile telecommunications network 508 may advantageously be reduced.

Figure 6 shows a security apparatus 600 similar to that described above in relation to Figure 3; similar features have been given similar reference numerals and may not necessarily be described further here.

The security apparatus has a memory module 634 configured to store a plurality of user-identification-data-strings. Information 632 representative of the stored plurality of user-identification-data-strings may be exchanged between the memory module 634 and the processor 606. When the security-location-information 622 includes a particular user-identification-string, then the processor may check whether the particular user thus identified is authorised to access the lock-module by checking whether the particular user is also identified in the plurality of user-identification-data-strings. The security-location-information 622 and the memory module 634 can then be used to determine the security-condition-signal 628, so as to enable access to the lock-module, when there is a match between the security-location-information and at least one of the plurality of user-identification-data-strings.

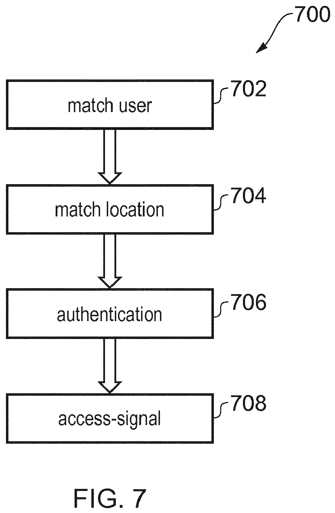

Figure 7 shows the steps of a method, as a flow chart 700, that may be executed by the security apparatus disclosed above in relation to Figure 6. In this example, the method steps may advantageously be executed in the order shown in Figure 7 and described below. In other examples, the steps may be executed in a different order.

A first step 702 involves matching security-location-information with a least one of a plurality of user-identification-data-strings stored in a memory module coupled to the security apparatus. In this way, a user with a key-module may be matched to one of a stored list of users that may be authorised to access the lock-module.

A second step 704 involves determining the security-condition-signal based on whether the location of the key-module is inside or outside of a predetermined-proximity of the location of the lock-module. In this way, an authorised user, who is being subject to a relay station attack, may not be granted access to the lock-module, while an authorised user who is located sufficiently close to the lock-module may be allowed access.

Only performing the second step 704 after the first step 702 has identified an authorised user may reduce the bandwidth and processing requirements of the system since the location matching performed at the second step may be avoided for users that are not authorized to access the lock-module.

A third step 706 includes performing an authentication step by communicating with one or more of the key-module and the lock-module via the mobile telecommunications network. The third step 706 may employ multifactor authentication and/or encryption procedures, such as those described below in relation to Figure 8, to improve the security of the security apparatus and associated systems.

A fourth step 708 includes providing an access-signal to an access-terminal, to enable a user to access a vehicle, or other apparatus, based on the security-condition-signal and/or the authentication step. For example, the access-signal may be provided to a vehicle security system that will reconfigure the vehicle to grant access to selected functionality as appropriate to a user's location relative to the vehicle.

Figure 8 shows an example of a four pass authentication system 800. This system 800 may be used to secure communications between a security apparatus of the present disclosure and other components, such as a lock-module and a key-module.

The system 800 is divided into three parts by a first dashed line 802 and a second dashed line 804. To the left side of the first dashed line 802, information processing, performed within a vehicle 810, is shown. The vehicle 810 contains a lock-module (not shown). Between the first dashed line 802 and the second dashed line 804 information flows via a mobile telecommunications system, are shown. To the right side of the second dashed line 804, information processing, performed within a mobile device 812, is shown. The mobile device 812 contains a key-module (not shown). The security apparatus (not shown) may be located in the vehicle 810, in the mobile device 812, or at a remote location in the mobile telecommunications network (not shown).

The processing and transmission of information that occurs within the system 800 takes place over a finite period of time, and a vertical time axis 806 shows how time elapses as the system 800 operates.

The system 800 shows a general flow chart for a secured four pass authentication procedure that can be used in RKE (2 way mode), PKE, PKG and other modes of operation to enhance the security of the mode of operation. The communication sequence can be triggered by the mobile device 812 or by the vehicle 810. In either case, in an initial step an IDE 820 (which is an example of an identification string) of the mobile device 812 is transmitted 822, via the mobile telecommunications network, to the vehicle 810. The IDE 820 can be verified by the vehicle 810 if it matches an entry in a list of identification strings of authorised mobile devices stored in a memory module of the vehicle 810. The memory module may be an Electrically Erasable Programmable Read Only Memory (EEPROM). This initial step can provide a fast decision about whether the mobile device 812 may, potentially, be allowed to access the vehicle 810, depending on further decisions relating to the location of the mobile device 812 relative to the vehicle 810.

In this example, the IDE 820 matches and a first-challenge 824 from the mobile device 812 is transmitted in a first-transmission 826 via the mobile telecommunications network to the vehicle 810. The first-challenge 824 can be used as input for the input vector (IV) of a cryptographic process. The vehicle 810 responds to the first-challenge 824 with a second-challenge 828 that is transmitted, in a second transmission 830 to the mobile device 812. The second-challenge 828 can also be used as an IV for a cryptographic process.

By using a cryptographic engine (not shown) at both the vehicle 810 and the mobile device 812, an output vector (OV) of the cryptographic process can be calculated.

A part of the OV is used as a message authentication code 832 (MAC) which is transmitted in a third transmission 834 from the vehicle 810 to the mobile device 812. Another part of the OV is used for a response 836 (RES). The response 836 is transmitted in a fourth transmission 838 from the mobile device 812 to the vehicle 810.

If both the MAC 832 and the response 836 match at both the vehicle 810 and the mobile device 812, then the authentication process is successful and a cryptographic session 840 is then established.

By using the output vectors, security-location-information can be securely transferred from the mobile device 812 to the vehicle 810. When the security apparatus is provided in the vehicle, the security-location-information can thus enable the security apparatus to determine if the key-module is within the predetermined-proximity, or not.

In the event that several different mobile devices attempt to communicate with the vehicle 810 at the same time, a 'collision' between the different mobile devices may be said to occur. The security apparatus may perform an anti-collision process to select one valid mobile device from among the several different mobile devices after location detection has been completed. By detecting the location of each of the different mobile devices, the security apparatus may choose to proceed with further communication only with mobile devices positioned at a valid location, that is inside the predetermined proximity. The communication session with the other mobile devices, that are outside of the predetermined proximity, is stopped once their invalid location has been identified.

In some examples, any security apparatus of the present disclosure may be provided as an integrated circuit. Further, any security apparatus of the present disclosure may be provided as part of a mobile electronic device or a vehicle. When the security apparatus is provided in a mobile electronic device, the device may also comprise a key-module. When the security apparatus is provided in a vehicle, the vehicle may also comprise a lock-module. In other examples, the security apparatus may be provided in a network-module that forms a component of a mobile telecommunications network, such as a network server.

A variety of different features and functionality may be enabled by security apparatus of the present disclosure, such as:
- Passive and Remote Keyless Entry using a mobile device and solely utilizing a mobile communication network (e.g. a 5G network) for data communication and mobile phone (key-module) localization (consequently, proprietary Low Frequency (LF), Radio Frequency (RF), Bluetooth Low Energy (BTLE), or Ultra Wide Band (UWB) systems may be provided as optional or complementary features);
- Distance bonding between a mobile device and a vehicle for safety critical applications, such as remote parking, or remote car door locking;
- Autonomous detection, whereby the system may wake up from a power saving mode when the mobile device enters or leaves a certain predetermined proximity around the vehicle to initiate convenient functions, such as a welcome light, or walk away locking, for example;
- Fast reaction times may be provided for passive and remote entry and for starting the engine;
- Secure end to end communication between the mobile device and the mobile module in the vehicle may be enabled by trusted secure elements in both devices;
- Fast and secure authentication algorithms may be used to minimize latency times;
- Precise location detection of both the mobile device and the vehicle;
- Relay station attack prevention;
- Optional backup transponder operation may be provided, for example, by standardized near field communication (NFC) in passive mode;
- In absence of the mobile network, the mobile device may attempt automatically to create a direct point to point connection to the vehicle through state of the art wireless technologies, such as 5G network, BTLE, Wireless Local Area Network (WLAN), or NFC; and
- Granting access to the vehicle from a remote place, to allow a third party user to get into the vehicle.

The impacts that autonomous (also called self-driving, driverless or robotic) vehicles are likely to have on vehicle access solutions for entry and engine-start are remarkable. Additionally, the increasing use of car sharing services will change the way that vehicle owners and users access vehicles.

In today's vehicle access systems, the authentication of the legitimate user is completed based on the user's possession of a physical token which is typically the key fob. The vehicle typically grants entry and engine-start solely based on the verification of the presence of the key within a certain predetermined proximity around the vehicle. Self-driving cars and car sharing services will demand completely new approaches to access and security, requiring, for example, that the vehicle owner manages authorizations to access and use the vehicle remotely. It could be advantageous to localize and authenticate not only a key fob within a predetermined proximity around the vehicle, but also to localize and authenticate occupants (who cannot drive) in self-driving cars and also to localize and authenticate vehicles without human occupants.

An important idea provided by the present disclosure is that mobile communication networks (for example, future 5G networks) may be used to:
(i) replace car access solutions based on key fobs, LF/RF point-to-point communication methods, and LF Relative Signal Strength Indication (RSSI) localization techniques;
(ii) enable new authentication use cases required by autonomous vehicles and car sharing methods.

The capabilities of a next generation mobile network may be used to provide for secure, fast and reliable vehicle access applications. Optionally, a backup system may be provided for areas where communications using the next generation mobile network is not available or when the battery of the mobile device is empty.

5G networks are expected to provide increasing speed and quality of data connections that may be expected to reach speeds of ten to one hundred times faster than 4G networks. 5G networks may depend on millimetre wave technology, which is a band of spectrum between 30 GHz and 300 GHz, that is, an extremely high frequency of waves which can be used to transmit data wirelessly. With faster network speeds and almost instant latency, 5G is expected to take connectivity to the next level. 5G connectivity can be seen as disruptive technology that may support full passive entry/start systems using mobile devices (instead of a classical key fobs) in which the mobile devices rely on the mobile network for data communications.

Alternative passive keyless entry/go systems that may be used for car access and immobilisation, are based on expensive components for keys, base station integrated circuits, antennas and cables. Access to a vehicle is not standardized across different vehicle models and the security and latency time depends on the particular application. It may be possible for the user to solely use a classical key fob for passive keyless entry. Mobile phones may not support the proprietary interfaces (125 kHz LF) that can be used in PKE.

It will be appreciated that any security apparatus disclosed herein may be used in conjunction with any apparatus where access to the apparatus may advantageously be granted to a user having a key-module that is within a predetermined proximity of the apparatus. While the apparatus may be any type of vehicle, as disclosed above, the apparatus may instead relate to non-automotive access systems, such as may be found in a building, for example. The lock-module may be configured to lock or unlock a door in a building. Alternatively, the lock-module may provide distance-based access to any other functionality of a building, such as lighting or heating/air conditioning systems. In other examples, the apparatus may include components of a secure payments system, which may enable payments to be made only when a key-module is in sufficiently close proximity to the payments system. This may advantageously prevent a relay station attack being used to initiate a payment by a user's contactless payment device without the user's knowledge or consent.

The instructions and/or flowchart steps in the above figures can be executed in any order, unless a specific order is explicitly stated. Also, those skilled in the art will recognize that while one example set of instructions/method has been discussed, the material in this specification can be combined in a variety of ways to yield other examples as well, and are to be understood within a context provided by this detailed description.

In some example embodiments the set of instructions/method steps described above are implemented as functional and software instructions embodied as a set of executable instructions which are effected on a computer or machine which is programmed with and controlled by said executable instructions. Such instructions are loaded for execution on a processor (such as one or more CPUs). The term processor includes microprocessors, microcontrollers, processor modules or subsystems (including one or more microprocessors or microcontrollers), or other control or computing devices. A processor can refer to a single component or to plural components.

In other examples, the set of instructions/methods illustrated herein and data and instructions associated therewith are stored in respective storage devices, which are implemented as one or more non-transient machine or computer-readable or computer-usable storage media or mediums. Such computer-readable or computer usable storage medium or media is (are) considered to be part of an article (or article of manufacture). An article or article of manufacture can refer to any manufactured single component or multiple components. The non-transient machine or computer usable media or mediums as defined herein excludes signals, but such media or mediums may be capable of receiving and processing information from signals and/or other transient mediums.

Example embodiments of the material discussed in this specification can be implemented in whole or in part through network, computer, or data based devices and/or services. These may include cloud, internet, intranet, mobile, desktop, processor, look-up table, microcontroller, consumer equipment, infrastructure, or other enabling devices and services. As may be used herein and in the claims, the following non-exclusive definitions are provided.

In one example, one or more instructions or steps discussed herein are automated. The terms automated or automatically (and like variations thereof) mean controlled operation of an apparatus, system, and/or process using computers and/or mechanical/electrical devices without the necessity of human intervention, observation, effort and/or decision.

It will be appreciated that any components said to be coupled may be coupled or connected either directly or indirectly. In the case of indirect coupling, additional components may be located between the two components that are said to be coupled.

In this specification, example embodiments have been presented in terms of a selected set of details. However, a person of ordinary skill in the art would understand that many other example embodiments may be practiced which include a different selected set of these details. It is intended that the following claims cover all possible example embodiments.

## Claims

1. A security-apparatus, comprising:
a security-location-terminal, configured to receive security-location-information representative of a location of a key-module; and
a lock-location-terminal, configured to receive lock-location-information representative of a location of a lock-module,
a processor, configured to compare the security-location-information with the lock-location-information, and determine a security-condition-signal based on whether the location of the key-module is inside or outside of a predetermined-proximity of the location of the lock-module; and
an output-terminal, configured to provide the security-condition-signal,
wherein, the security-apparatus is configured to receive at least one of the security-location-information and the lock-location-information via a mobile telecommunications network.

2. The security-apparatus of claim 1, wherein the lock-module is provided in a vehicle and the security-condition-signal is configured to enable a user to access the vehicle.

3. The security-apparatus of claim 1 or claim 2, wherein the security-location-data further comprises a user-identification-string representative of a particular user.

4. The security-apparatus of any preceding claim, wherein:
if the location of the key-module is outside of the predetermined-proximity of the location of the lock-module, then the processor is configured to set the security-condition-signal to comprise an outside-value, and
if the location of the key-module is inside of the predetermined-proximity of the location of the lock-module, then the processor is configured to set the security-condition-signal to comprise an inside-value.

5. The security-apparatus of claim 4, wherein:
the outside-value is configured to set an outside-mode of operation comprising one or more of:
enabling: a locking mode of operation / a window-closure mode of operation / an engine immobilizer mode of operation / a door-closure mode of operation;
disabling: a PKE mode of operation / a RKE mode of operation / a PKG mode of operation / a self-parking mode of operation / an air-conditioning mode of operation / a lighting mode of operation; and
the inside-value is configured to set an inside-mode of operation comprising one or more of:
enabling: a PKE mode of operation / a RKE mode of operation / a PKG mode of operation / a self-parking mode of operation / an air-conditioning mode of operation / a lighting mode of operation
disabling: a locking mode of operation / an engine immobilizer mode of operation.

6. The security-apparatus of any preceding claim, wherein the processor is further configured to compare the security-location-information with the lock-location-information, and determine the security-condition-signal based on whether the location of the key-module is inside or outside of a second-predetermined-proximity of the location of the lock-module, and
if the location of the key-module is outside of the second-predetermined-proximity of the location of the lock-module, then the processor is configured to set the security-condition-signal to comprise a second-outside-value, and
if the location of the key-module is inside of the second-predetermined-proximity of the location of the lock-module, then the processor is configured to set the security-condition-signal to comprise a second-inside-value.

7. The security-apparatus of claim 6, wherein:
the second-outside-value is configured to set an outside-mode of operation comprising one or more of enabling a second-outside-mode of operation and disabling a third-outside-mode of operation; and
the second-inside-value is configured to set an inside-mode of operation comprising one or more of enabling a second-inside-mode of operation and disabling a third-inside-mode of operation.

8. The security-apparatus of any preceding claim wherein the security-condition-signal is provided to an authorization-module configured to provide an authorization-signal based on the security-condition-signal and one or more of:
a user-actuation-signal representative of a user input; and
a matching-signal based on matching the security-condition-signal with predetermined-identity-data stored in a memory-module.

9. The security-apparatus of any preceding claim, wherein one or more of the security-location-information and the lock-location-information are provided by the mobile telecommunications network.

10. The security-apparatus of any preceding claim, further configured to:
determine a distance between the lock-module and the key-module by comparing the security-location-information with the lock-location-information; and
set the security-condition-signal to comprise:
an inside-value, if the distance is less than a predetermined threshold; or
an outside-value, if the distance is greater than the predetermined threshold.

11. The security-apparatus of any preceding claim, wherein the security-apparatus is configured to receive at least one of the security-location-information and the lock-location-information in an encrypted form and to perform decryption.

12. The security-apparatus of any preceding claim, wherein the security-apparatus is further configured to:
store a previous-locking-location based on a location of one or more of the key-module and the lock-module at a time of a previous locking-operation;
compare the previous-locking-location with the security-location-information; and
if the key-module is within a predetermined proximity of the previous-locking-location then provide an access-authorisation signal to the lock-module via the mobile telecommunications network.

13. The security-apparatus of any preceding claim, wherein the security-location-data further comprises a user-identification-string representative of a particular user, the security-apparatus further comprising a memory module configured to store a plurality of user-identification-data-strings, and wherein the security-apparatus is further configured to determine the security-condition-signal based on matching the security-location-information with at least one of the plurality of user-identification-data-strings.

14. The security-apparatus of claim 13, wherein the security-apparatus is configured to perform the following steps in the following order:
i) match the security-location-information with a least one of the plurality of user-identification-data-strings
ii) determine the security-condition-signal based on whether the location of the key-module is inside or outside of a predetermined-proximity of the location of the lock-module
iii) perform an authentication step by communication with one or more of the key-module and the lock-module via the mobile telecommunications network;
iv) provide an access-signal to an access-terminal, to enable a user to access a vehicle, based on the security-condition-signal and/or the authentication step.

15. A system comprising the security apparatus of any preceding claim, wherein the system is any one of:
an integrated circuit;
a mobile electronic device comprising the key-module;
a vehicle comprising the lock-module; and
a network-module coupled to the mobile telecommunications network.
